# EUROPÄISCHE PATENTANMELDUNG

(11) **EP 4 328 614 A1**
(43) Veröffentlichungstag der Anmeldung: **28.02.2024**
(21) Anmeldenummer: 23187660.8
(22) Anmeldetag: 25.07.2023
(51) Int. Cl.: G01S 5/02, F16P 3/14

(54) **FUNKORTUNGSSYSTEM MIT TESTEINRICHTUNG**

(30) Priorität: 26.07.2022 DE 102022118737
(71) Anmelder: Pilz GmbH & Co. KG, 73760 Ostfildern (DE)
(72) Erfinder: Loy, Stefan, 73760 Ostfildern (DE); Fritzmann, Marcus, 73760 Ostfildern (DE); Ibrocevic, Onedin, 73760 Ostfildern (DE); Pullmann, Jürgen, 73760 Ostfildern (DE)
(74) Vertreter: Witte, Weller & Partner Patentanwälte mbB

(57) **Zusammenfassung**

Funkortungssystem (10) mit einer ersten Funkeinheit (12), einer zweiten Funkeinheit (14), einer Referenzfunkeinheit (16) sowie mit einer mit dem Funkortungssystem (10) koppelbaren Testeinrichtung (26). Das Funkortungssystem (10) ist dazu eingerichtet, mittels einer Funkortung eine erste definierte Eigenschaft (20), insbesondere Position oder Lage, zwischen der ersten Funkeinheit (12) und der zweiten Funkeinheit (14) zu bestimmen sowie mittels der Funkortung eine zweite definierte Eigenschaft (22, 22`) zwischen der ersten Funkeinheit (12) und der Referenzfunkeinheit (16) zu bestimmen. Die zweite definierte Eigenschaft (22, 22`) ist gemäß einem der Testeinrichtung (26) bekannten Muster (24) kontinuierlich veränderbar, wobei die Testeinrichtung (26) dazu eingerichtet ist, eine Bestätigung der ersten definierten Eigenschaft (20) nur dann zu erzeugen, wenn das Funkortungssystem (10) die sich gemäß dem Muster (24) verändernde zweite definierte Eigenschaft (22, 22`) erfasst.

## Beschreibung

Die vorliegende Erfindung betrifft ein Funkortungssystem, ein Funkortungsverfahren sowie ein Sicherheitssystem zur Absicherung einer technischen Anlage mit einem solchen Funkortungssystem.

Ein Funkortungssystem (auch als Funknavigation bezeichnet) ist ein funkbasiertes Lokalisierungssystem, bei dem eine Position einer drahtlos kommunizierenden Funkeinheit in einem Bezugssystem basierend auf Eigenschaften empfangener Funkwellen oder Signale bestimmt wird.

Aus dem Stand der Technik sind verschiedene Funkortungssysteme bekannt. Zu den bekanntesten Funkortungssystemen zählen die globalen Navigationssatellitensysteme (GPS, Galileo, etc.), bei denen ein Funkempfänger anhand von Signalen mit Zeitinformationen, die von Satelliten mit bekannter Umlaufbahn ausgesendet werden, seine Position in einem terrestrischen Koordinatensystem bestimmen kann. Ferner sind verschiedene Funkortungssysteme für Innenräume bekannt, mit denen die Position einer Funkeinheit innerhalb eines Gebäudes bestimmt werden kann. Zu den gängigsten Ortungstechnologien gehören hierbei Bluetooth-Low-Energy, WLAN und Ultra Wideband-Technologie.

Die bekannten Funkortungssysteme werden im industriellen Umfeld eingesetzt, um Abläufe autonom arbeitender Maschinen zu kontrollieren. Beispielsweise können Funkortungssysteme für führerlose Fahrzeuge eingesetzt werden, sodass sich diese ohne Spurführung durch eine Industrieanlage bewegen können. Ferner ist es bekannt, Funkortungssysteme im Bereich der funktionalen Sicherheit einzusetzen. Die Funkortungssysteme werden hierbei eingesetzt, um Positionen verschiedener Akteure (Personen und Maschinen) in einem Bereich einer technischen Anlage zu bestimmen und anhand der Positionsinformationen ein adaptives Sicherheitssystem mit variabler Sicherheitskonfiguration bereitzustellen. Auf diese Weise kann bevorzugt auf festinstallierte und starre Schutzeinrichtungen verzichtet werden, wodurch eine flexiblere Zusammenarbeit zwischen Menschen und Maschinen in einem gemeinsamen Arbeitsraum möglich ist.

DE 10 2019 132 024 A1 und EP 3 835 806 A1 zeigen jeweils adaptive Sicherheitssysteme, die auf ein Funkortungssystem zurückgreifen. Während DE 10 2019 132 024 A1 die Lokalisierung einer beweglichen Maschine beschreibt, zeigt EP 3 835 806 A1 als ein Beispiel die Positionsbestimmung einer Person, die mit einem Transponder (Funkeinheit) ausgestattet ist. Sowohl DE 10 2019 132 024 A1 als auch EP 3 835 806 A1 führen aus, dass für die Verwendung von Positionsinformationen für adaptive Sicherheitssysteme die Positionsinformationen gängiger Funkortungssysteme nicht zuverlässig genug seien, um diese für sicherheitskritische Anwendungen einsetzen zu können. Dementsprechend schlagen beide Offenbarungen vor, die Messungen des Funkortungssystems separat und unabhängig zu überprüfen.

DE 10 2019 132 024 A1 schlägt vor, einen zusätzlichen, auf einem anderen Prinzip basierenden Sensor zu verwenden, der unabhängig vom Funkortungssystem eine vom Funkortungssystem ermittelte Position verifiziert. Auf diese Weise kann eine Position der bewegbaren Maschine durch zwei voneinander unabhängige Merkmale eindeutig identifiziert werden und im Falle, dass diese Werte voneinander abweichen, kann ein sicherer Zustand herbeigeführt werden, um die geforderte Sicherheit zu gewährleisten. Ein zusätzliches, auf einem anderen Prinzip beruhendes Positionsmesssystem ist jedoch mit einem erheblichen Aufwand verbunden und für einige Anwendung nicht immer realisierbar. Zudem besteht bei dieser Variante das Problem, dass bei einer Abweichung der Messergebnisse der einzelnen Positionsmesssysteme nicht unmittelbar ersichtlich ist, welches der beiden Systeme nicht ordnungsgemäß funktioniert, sodass beide Systeme überprüft werden müssen und ein Diagnoseaufwand steigt.

EP 3 835 806 A1 schlägt vor, zusätzlich zu der vom Funkortungssystem bereitgestellten Position zwei sichere Abstände zu Ankerobjekten mit einer sicheren Distanzmessungsvorrichtung gemäß dem "Two-Way-Ragning"-(TWR)-Prinzip zu bestimmen und einen Schutzradius basierend auf der bereitgestellten Position, den sicheren Abständen und den bekannten Positionen der Anker-Transponder zu bestimmen. Hier ist es somit eine Idee, die Positionen von mindestens zwei Ankerpunkte zusätzlich zum eigentlichen Objekt zu bestimmen, um anhand der so ermittelten Daten die eigentliche Messung zu verifizieren. Im Gegensatz zu der Idee aus DE 10 2019 132 024 A1 wird hierbei kein zusätzliches Lokalisierungssystem benötig, allerdings ist die beschriebene Lösung anfällig gegen Fehler gemeinsamer Ursache, bspw. durch systematische Verzögerungen der Signallaufzeit oder veränderte Umweltbedingungen.

DE 10 2020 102 155 A1 ist eine weitere Druckschrift, die ein Sicherheitssystem und Verfahren zur Lokalisierung eines Objekts beschreibt. Gemäß DE 10 2020 102 155 A1 werden an dem zu lokalisierenden Objekt drei Funktransponder vorgesehen, die in einem Abstand zueinander angeordnet sind und eine im Raum eindeutige Ebene aufspannen. Eine Steuer- und Auswerteeinheit vergleicht die Positionsdaten der Funktransponder, um geprüfte Positionsdaten des Objekts zu bilden.

Vor diesem Hintergrund ist es eine Aufgabe der vorliegenden Erfindung ein verbessertes Funkortungssystem anzugeben. Insbesondere ist es eine Aufgabe ein Funkortungssystem anzugeben, das besser gegen Fehler gemeinsamer Ursache geschützt ist. Schließlich ist es eine Aufgabe ein verbessertes adaptives Sicherheitssystem anzugeben, das auf einem solchen Funkortungssystem basiert.

Gemäß einem Aspekt der vorliegenden Offenbarung wird diese Aufgabe gelöst durch ein Funkortungssystem, aufweisend: eine erste Funkeinheit; ein zweite Funkeinheit; eine Referenzfunkeinheit; sowie eine mit dem Funkortungssystem koppelbare Testeinrichtung, wobei das Funkortungssystem dazu eingerichtet ist, mittels einer Funkortung eine erste definierte Eigenschaft, insbesondere Position oder Lage, zwischen der ersten Funkeinheit und der zweiten Funkeinheit zu bestimmen sowie mittels der Funkortung eine zweite definierte Eigenschaft zwischen der ersten Funkeinheit und der Referenzfunkeinheit zu bestimmen, wobei die zweite definierte Eigenschaft gemäß einem der Testeinrichtung bekannten Muster kontinuierlich veränderbar ist, und wobei die Testeinrichtung dazu eingerichtet ist, eine Bestätigung der ersten definierten Eigenschaft nur dann zu erzeugen, wenn das Funkortungssystem, die sich gemäß dem Muster verändernde zweite definierte Eigenschaft erfasst.

Gemäß einem weiteren Aspekt der vorliegenden Offenbarung wird diese Aufgabe ferner gelöst durch ein Funkortungsverfahren für ein Funkortungssystem mit einer ersten Funkeinheit, einer zweiten Funkeinheit, einer Referenzfunkeinheit sowie einer Testeinrichtung, die mit dem Funkortungssystem koppelbar ist, aufweisend:
- Bestimmen einer ersten definierten Eigenschaft, insbesondere Position oder Lage, zwischen der ersten Funkeinheit und zweiten Funkeinheit mittels einer Funkortung;
- Bestimmen einer zweiten definierten Eigenschaft zwischen der ersten Funkeinheit und der Referenzfunkeinheit mittels der Funkortung, wobei die zweite definierte Eigenschaft gemäß einem der Testeinrichtung bekannten Muster kontinuierlich veränderbar ist, und
- Bestätigen der ersten definierten Eigenschaft durch die Testeinrichtung in dem Fall, dass das Funkortungssystem, die sich gemäß dem Muster verändernde zweite definierte Eigenschaft erfasst.

Gemäß einem weiteren Aspekt der vorliegenden Offenbarung wird diese Aufgabe ferner gelöst durch ein Sicherheitssystem zur Absicherung einer technischen Anlage mit einem vorstehend genannten Funkortungssystem, aufweisend: eine Sicherheitssteuerung, die dazu eingerichtet ist, eine Sicherheitskonfiguration basierend auf einer Funkortung des Funkortungssystems aufzuführen oder anzupassen, wobei die Sicherheitssteuerung die Sicherheitskonfiguration nur dann ausführt oder anpasst, wenn die Testeinrichtung des Funkortungssystems die Funkortung bestätigt.

Es ist somit eine Idee der vorliegenden Erfindung ein Funkortungssystem mit einer zusätzlichen Testeinrichtung auszustatten, um das Funkortungssystem kontinuierlich, dynamisch und deterministisch überprüfbar zu machen.

Das Funkortungssystem kann hierbei ein beliebiges Funkortungssystem sein, bei dem zwei Funkeinheiten mittels Funkortung eine definierte Beziehung zueinander bestimmen, um hieraus Rückschlüsse über ihre Position, Lage oder Orientierung relativ zueinander oder in einem Bezugssystem treffen zu können. Beispielsweise kann das Funkortungssystem ein Echtzeit-Lokalisierungssystem (engl. Real-Time-Locating-System (RTLS)) sein, welches auf Ortungstechnologien auf Basis von Bluetooth-Low-Energy, WLAN und/oder Ultra Wideband-Technologie zurückgreift.

Die erste Funkeinheit kann eine stationär angeordnete Funkstation sein und die zweite Funkeinheit kann ein tragbarer Transponder sein. Insbesondere kann die erste Funkeinheit auch als eine Ankerstation einer Infrastruktur des Funkortungssystems ausgebildet sein.

Zur Positionsbestimmung ermittelt das Funkortungssystem über eine Funkortung eine definierte erste Eigenschaft zwischen der ersten Funkeinheit und der zweiten Funkeinheit. Die Funkortung kann beispielsweise auf einer Signallaufzeit zwischen der ersten Funkeinheit und der zweiten Funkeinheit beruhen, wobei die Signallaufzeit oder eine davon angeleitete Größe der ersten definierten Eigenschaft entspricht. Alternativ oder ergänzend kann die Funkortung auch auf einem anderen Prinzip beruhen, sodass die erste definierte Eigenschaft auch durch einen Winkel oder eine Signalstärke repräsentiert werden kann. Vorzugsweise kann das Funkortungssystem die erste definierte Eigenschaft kontinuierlich abfragen.

Ferner bestimmt das Funkortungssystem eine zweite definierte Eigenschaft zwischen der ersten Funkeinheit und einer Referenzfunkeinheit. Das Funkortungssystem kann die zweite definierte Eigenschaft ebenfalls kontinuierlich abfragen. Die Bestimmung der zweiten definierten Eigenschaft erfolgt vorzugsweise auf gleiche Art und Weise wie die Bestimmung der ersten definierten Eigenschaft zwischen der ersten Funkeinheit und der zweiten Funkeinheit. D. h. die zweite definierte Eigenschaft ist vorzugsweise die gleiche Eigenschaft wie die erste definierte Eigenschaft.

Im Gegensatz zur ersten definierten Eigenschaft ist die zweite definierte Eigenschaft jedoch veränderbar. Veränderbar heißt in diesem Zusammenhang, dass in einem definierten Zeitintervall oder zeitkontinuierlich die zweite definierte Eigenschaft einen anderen Wert annimmt, wenn die definierte Eigenschaft mittels Funkortung bestimmt wird.

Die Veränderung der zweiten definierten Eigenschaft kann von der Referenzfunkeinheit automatisch, direkt oder indirekt, verursacht werden. Beispielsweise kann die Referenzfunkeinheit in einer festgelegten Weise die tatsächliche Position innerhalb des für die Funkortung maßgeblichen Bezugssystems verändern oder aber ein auszusendendes Signal so definiert verändern, dass es von dem Funkortungssystem als an einer anderen Position befindlich erkannt wird. Alternativ oder ergänzend kann auch die Testeinrichtung dazu eingerichtet sein, die Veränderung der zweiten definierten Eigenschaft aktiv zu veranlassen, beispielsweise indem die Testeinrichtung mit der Referenzfunkeinheit gekoppelt ist und von dieser eine Verhaltensänderung anfordert oder die Referenzfunkeinheit eine solche anfordert.

Das Funkortungssystem erfasst die Veränderung der zweiten definierten Eigenschaft, indem es kontinuierlich die zweite definierte Eigenschaft abfragt. Ferner übermittelt das Funkortungssystem die erfasste Veränderung an die Testeinrichtung, welche überprüft, ob die Veränderung einem definierten Muster entspricht. Das definierte Muster, d.h. wie sich die zweite definierte Eigenschaft über die Zeit verändert, muss der Testeinrichtung bekannt sein. Die Testeinrichtung muss somit das Muster im Voraus kennen, dieses selbst vorgeben oder über das Muster in Kenntnis versetzt werden.

Die Testeinrichtung überprüft, ob die Veränderung dem Muster entspricht. Die Testeinrichtung hat folglich eine Erwartungshaltung an die Veränderung der zweiten definierten Eigenschaft über die Zeit. Wird diese Erwartungshaltung erfüllt, bestätigt die Testeinrichtung die Messung der ersten definierten Eigenschaft, d. h. die eigentliche, anwendungsrelevante Messung. Wird die Erwartungshaltung nicht erfüllt, bestätigt die Testeinrichtung die Messung der ersten definierten Eigenschaft nicht. Die Testeinrichtung kann die Messung bspw. bestätigen, indem sie ein entsprechendes Freigabesignal ausgibt oder dieses unterlässt.

Die Bestätigung der Messung erfolgt nur, wenn die Testeinrichtung erfasst, dass sich die zweite definierte Eigenschaft gemäß dem bekannten Muster verändert. Auf diese Weise lässt sich kontinuierlich oder in bestimmten Zeitabständen überprüfen, ob die Funkortung ortungsgemäß funktioniert. Das Funkortungssystem wird somit nicht nur aktiv, sondern auch dynamisch getestet. Mit anderen Worten, im System ist immer eine Komponente vorhanden, die sich kontinuierlich in bestimmter Weise verändert, sodass auch in einem statischen Szenario die Messung durch eine dynamische Komponente bestätigt wird.

Der ordnungsgemäße Betrieb des Funkortungssystems lässt sich auf diese Weise einfach testen. Insbesondere lässt sich das Funkortungssystem auf diese Weise kontinuierlich, dynamisch und deterministisch überprüfen. Ferner lässt sich die Testeinrichtung auf einfache Weise in bestehende Funkortungssysteme integrieren, ohne diese selbst anpassen zu müssen.

Die eingangsgenannte Aufgabe ist somit vollumfänglich gelöst.

In einer bevorzugten Ausgestaltung kann die Referenzfunkeinheit an einem Referenzobjekt angeordnet sein, das durch eine Positionsänderung die zweite definierte Eigenschaft gemäß dem Muster verändert. Beispielsweise kann die Referenzfunkeinheit an einem Objekt angeordnet sein, das sich auf eine definierte Weise bewegt, oder an einem Objekt, dessen Position bestimmbar ist. Ein solches Referenzobjekt kann eine rotierende Scheibe oder eine Lineareinheit sein, die sich auf eine definierte Weise bewegen. Denkbar ist auch, dass das Referenzobjekt ein Fahrzeug oder ein Roboter ist, deren Position auf anderem Wege der Testeinrichtung bekannt gemacht werden kann. Gemäß dieser Ausgestaltung kann eine sich kontinuierlich und deterministisch ändernde zweite definierte Eigenschaft auf einfache Weise eingerichtet werden.

In einer weiteren Ausgestaltung kann das Referenzobjekt auch zufällig seine Position verändern, wobei ein Sensor der Testeinrichtung die zufällige Positionsänderung des Referenzobjekts erfasst und auf diese Weise der Testeinrichtung das Muster der Veränderung bekannt macht. Auf diese Weise kann das Referenzobjekt ein beliebiges Objekt sein, das sich kontinuierliche in Raum bewegt. Es versteht sich, dass sich die Erfassung der Bewegung auch bei einem vorbekannten Muster als Ergänzung einsetzen lässt.

In einer weiteren Ausgestaltung kann die Referenzfunkeinheit die zweite definierte Eigenschaft verändern, indem es ein verändertes Signal aussendet, anhand dessen das Funkortungssystem die zweite definierte Eigenschaft bestimmt. Auf diese Weise kann die Referenzfunkeinheit die zweite definierte Eigenschaft verändern, ohne dass die Referenzfunkeinheit tatsächlich bewegt werden muss. Besonders bevorzugt weist die Referenzfunkeinheit hierfür räumlich voneinander beabstandete Antenneneinheiten auf, die es wahlweise benutzt, um ein auszusendendes Signal zu verändern. Die Antenneneinheiten können in der Referenzfunkeinheit integrierte Antenneneinheiten, externe Antenneneinheiten oder eine Kombination von externen und internen Antenneneinheiten sein. Als interne Antenneneinheit werden dabei solche Antenneneinheiten bezeichnet, die mit der Referenzfunkeinheit in einem gemeinsamen Gehäuse verbaut sind bzw. auf einer gemeinsamen Leiterplatte verknüpft sind. Externer Antenneneinheiten sind Antenneneinheiten, die separat an die Funkeinheit angeschlossen werden. Die Verwendung unterschiedlicher Antenneneinheiten zur Erzeugung eines veränderten Signals hat den Vorteil, dass handelsübliche Transponder auf einfache Weise hierfür hergerichtet werden können und ggf. eine reine Software-Erweiterung ausreichend sein kann, um diese Ausgestaltung zu implementieren.

In einer weiteren Ausgestaltung verändert sich die zweite definierte Eigenschaft nur in einem definierten Testintervall. Auf diese Weise lässt sich eine Testrate des Funkortungssystems auf bestimmte Zeitintervalle festlegen, wodurch sich die Testrate flexibel an eine Testanforderung anpassen lässt. So kann bei unkritischen Anwendungen der Test der Positionsermittlung bzw. der Kommunikation seltener erfolgen als bei sicherheitskritischen Anwendungen. Denkbar ist zudem, auch die Art des Musters in Abhängigkeit der Testanforderungen anzupassen. Bei kritischen Anwendungen kann beispielsweise ein kompliziertes und sich häufig änderndes Muster verwendet werden, während bei unkritischen Anwendungen ein einfaches Muster ausreicht. Insgesamt trägt die Ausgestaltung dazu bei, die Testeinrichtung flexibel auf die Testanforderungen einzustellen.

In einer weiteren Ausgestaltung sind die erste definierte Eigenschaft und die zweite definierte Eigenschaft eine Signallaufzeit, eine Signallaufzeitdifferenz, eine Signalumlaufzeit, ein Signaleinfallswinkel, eine Signalstärke, eine Kombination hiervon oder hiervon abgeleitete Werte. Bei der Verwendung von Ultra-Breitband-Technologie zur Funkortung können die erste Eigenschaft und die zweite Eigenschaft bspw. der Wert für UWB-Time-of-Arrival, UWB-Time-Difference-of-Arrival, UWB-Roundtrip-Time-of-Arrival oder UWB-Angle-of-Arrival sein. Ferner können die die erste Eigenschaft und die zweite Eigenschaft auch auf UWB-Two-Way-Ranging basieren. Beim Two-Way-Ranging senden alle Tags kontinuierlich ein Ortungssignal aus und bestimmen aus der Antwort jeweils den Abstand zueinander.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 eine schematische Darstellung eines Ausführungsbeispiels eines Funkortungssystems gemäß dieser Offenbarung,
Fig. 2 eine schematische Darstellung eines modifizierten Beispiels des in Fig. 1 gezeigten Ausführungsbeispiels,
Fig. 3 eine schematische Darstellung eines weiteren modifizierten Beispiels des in Fig. 1 gezeigten Ausführungsbeispiels,
Fig. 4 eine schematische Darstellung eines Ausführungsbeispiels eines Sicherheitssystems, und
Fig. 5 eine Flussdiagrammdarstellung eines Ausführungsbeispiels eines Funkortungsverfahrens gemäß dieser Offenbarung.

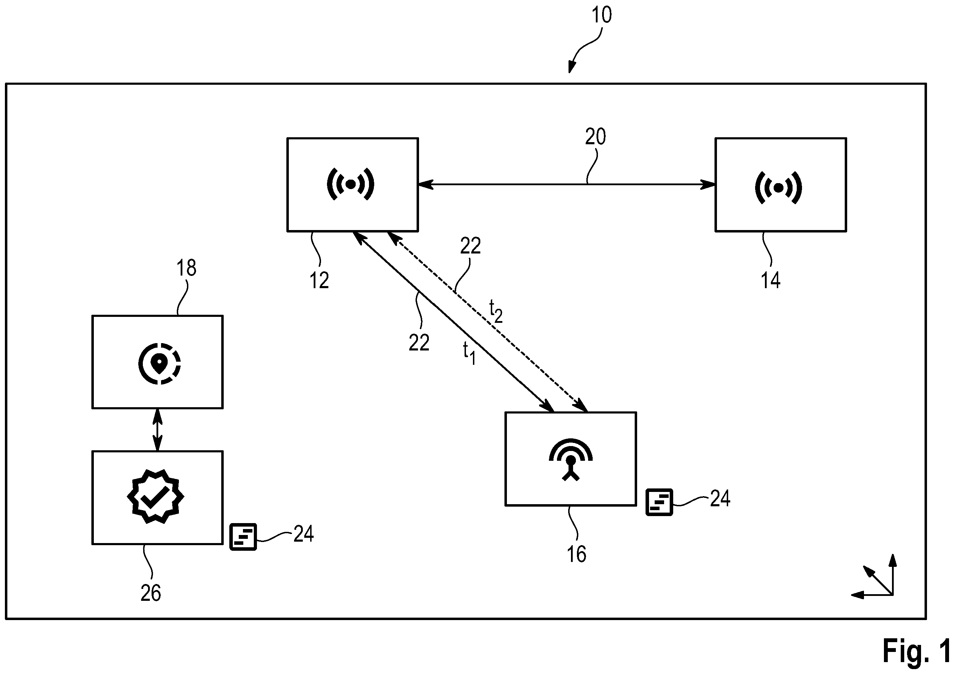

Fig. 1 zeigt in einer schematischen Darstellung ein Ausführungsbeispiel eines Funkortungssystems mit Testeinrichtung. Das Funkortungssystem ist hier in seiner Gesamtheit mit der Bezugsziffer 10 bezeichnet.

Das Funkortungssystem 10 weist eine erste Funkeinheit 12, mindestens eine zweite Funkeinheit 14 sowie eine Referenzfunkeinheit 16 auf, die im Folgenden einfach als Funkeinheiten bezeichnet werden, wenn für alle Funkeinheiten gleiche Eigenschaften beschrieben werden.

Die Funkeinheiten 12, 14, 16 sind Einrichtungen, die Funksignale senden oder empfangen können. Insbesondere können die Funkeinheiten Transponder sein, die eingehende Signale aufnehmen und automatisch beantworten oder weiterleiten. Die Funkeinheiten 12, 14 und 16 können unterschiedlich ausgebildete sein und stationäre oder mobile Einrichtungen sein.

In einem Beispiel kann die erste Funkeinheit eine stationäre Funkstation sein, die beliebige Signale aussenden und empfangen kann und eine zusätzliche Verarbeitungseinrichtung zur Signalverarbeitung aufweist. Die zweite Funkeinheit kann ein tragbarer Transponder (auch als Tag bezeichnet) sein, dessen Signalverarbeitung sich darauf beschränkt, eingehende Signale automatisch zu beantworten. Die Referenzfunkeinheit kann wiederum ein stationärer Transponder (auch als Anker bezeichnet) sein, von dem bestimmte Eigenschaften zumindest der Testeinrichtung bekannt sind. Es versteht sich, dass die Erfindung nicht auf diese konkrete Ausgestaltung der Funkeinheiten beschränkt ist.

Das Funkortungssystem 10 ist dazu eingerichtet, eine erste definierte Eigenschaft 20 zwischen der ersten Funkeinheit 12 und der zweiten Funkeinheit 14 sowie eine zweite definierte Eigenschaft 22, 22' zwischen der ersten Funkeinheit 12 und der Referenzfunkeinheit 16 zu bestimmen. Die erste definierte Eigenschaft 20 und zweite definierte Eigenschaft 22, 22' können eine Signallaufzeit, eine Signalumlaufzeit, ein Einfallswinkel, eine Signalstärke oder eine andere Größe sein, anhand derer ein Rückschluss auf die Position, Lage und/oder Orientierung der Funkeinheiten in einem für die Funkortung maßgeblichen Bezugssystem möglich ist. Denkbar ist zudem, dass eine Kombination der vorstehend genannten Eigenschaften die erste Eigenschaft die zweite Eigenschaft bilden.

Die erste definierte Eigenschaft 20 und die zweite definierte Eigenschaften 22, 22' sind vorzugsweise die gleichen Eigenschaften. Aus der ersten definierten Eigenschaft 20 kann insbesondere eine absolute Position der zweiten Funkeinheit 14 in dem Bezugssystem bestimmt werden. Ebenso kann aus der zweiten definierten Eigenschaft 22, 22` vorzugsweise eine absolute Position der Referenzfunkeinheit 16 bestimmt werden.

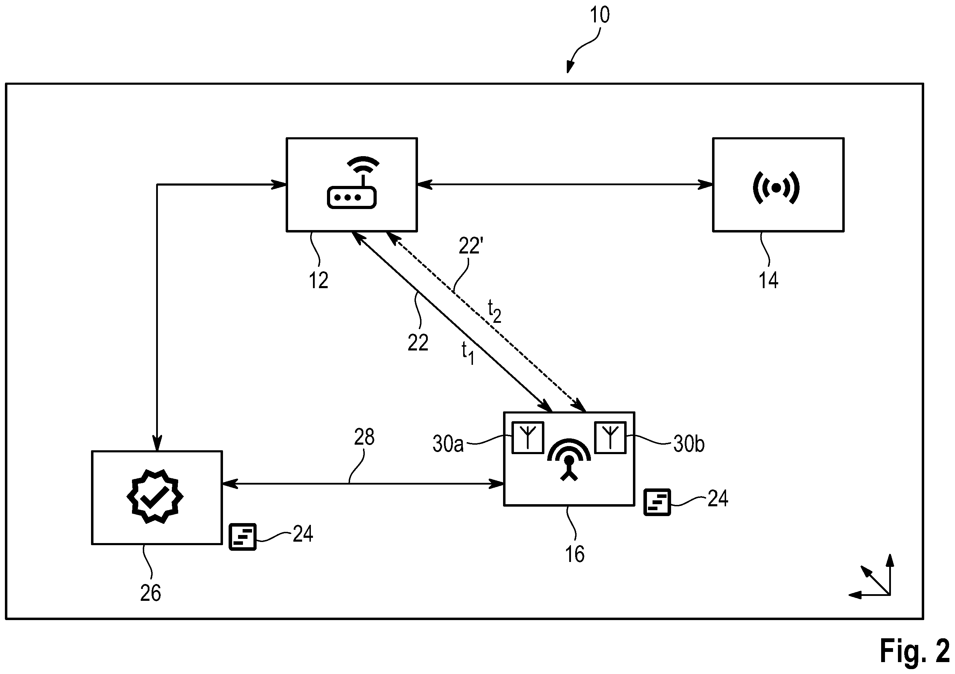

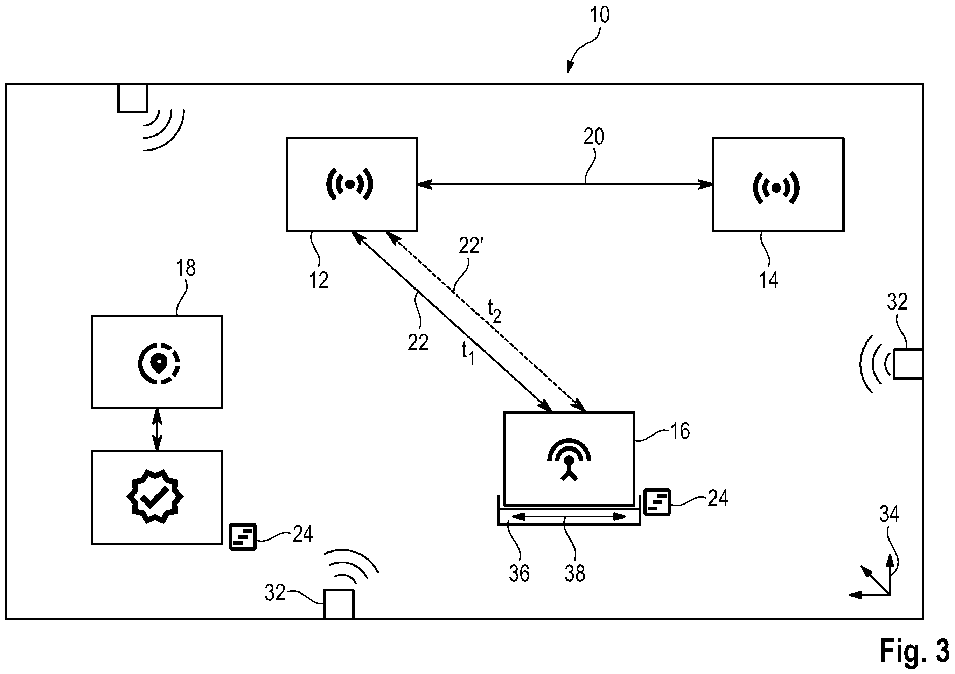

Die Bestimmung der Eigenschaften 20, 22, 22' durch das Funkortungssystem 16 ist hier schematisch durch Verarbeitungseinheit mit der Bezugsziffer 18 angedeutet und kann in verschiedenen Funkortungssystemen auf unterschiedliche Art und Weise erfolgen, wie nachfolgend in den Ausführungen gemäß der Figuren 2 und 3 angedeutet ist. Denkbar ist, dass die beteiligten Funkeinheiten eingerichtet sind, selbstständig die Eigenschaften untereinander zu bestimmen. Alternativ kann über eine entsprechende Infrastruktur auch ein zentrale Verarbeitungseinheit des Funkortungssystems 10 die definierten Eigenschaften der zwei Funkeinheiten zueinander bestimmen. Die im Nachfolgenden beschriebene Testeinrichtung ist auf keine spezielle Art der Funkortung beschränkt.

Die zweite definierte Eigenschaft, d. h. die Eigenschaft, die zwischen der ersten Funkeinheit 12 und der Referenzfunkeinheit 16 bestimmbar ist, ist variierbar. Das bedeutet, ein Wert, der die zweite definierte Eigenschaft repräsentiert, ist zu einem Zeitpunkt t1 ein anderer als zu einem Zeitpunkt t2, wie hier durch die beiden getrennten Pfeile mit dem Bezugsziffern 22 und 22' angedeutet ist. Die Veränderung der zweiten definierten Eigenschaft 22, 22' kann beispielsweise durch einen tatsächlichen Positionswechsel der Referenzeinheit 16 erfolgen oder durch Aussenden eines veränderten Signals durch die Referenzfunkeinheit 16.

Die zweite definierte Eigenschaft 22, 22' kann sich kontinuierlich und vorzugsweise in einer deterministischen Weise gemäß einem definierten Muster 24 verändern. Das Muster 24 kann beispielsweise einen Takt vorgeben, in dem sich die zweite definierte Eigenschaft über die Zeit verändern soll. Wenn alle Einheiten ordnungsgemäß funktionieren, erfasst das Funkortungssystem 10 die Veränderung der zweiten definierten Eigenschaft gemäß dem definierten Muster 24.

Eine Testeinrichtung 26 des Funkortungssystem 10 überprüft, ob das Funkortungssystem 10 die sich verändernde zweite definierte Eigenschaft gemäß dem Muster 24 erfasst. Ist dies der Fall, bestätigt die Testeinrichtung 26 die Bestimmung der ersten definierten Eigenschaft, anhand derer bspw. die Position der zweiten Funkeinheit 14 bestimmbar ist. Weicht hingegen die Erfassung von dem definierten Muster 24 ab oder erfasste das System überhaupt keine Änderungen, so bestätigt die Testeinrichtung 26 die erste definierte Eigenschaft nicht. Die Testeinrichtung 26 kann beispielsweise eine einfache Schalteinrichtung sein und die erste definierte Eigenschaft beispielsweise durch ein Freigabesignal bestätigt, welches explizit nur dann geschaltet wird, wenn das Funkortungssystem 10 die zweite definierte Eigenschaft 22, 22' gemäß dem definierten Muster 24 erfasst. Denkbar ist auch, dass die Testeinrichtung 26 ein Warnsignal ausgibt, wenn die zweite definierte Eigenschaft 22, 22` nicht gemäß dem Muster 24 erfasst wird.

Sowohl der Testeinrichtung 26 als auch der Referenzfunkeinheit 16 muss das definierte Muster 24 bekannt sein. Im einfachsten Fall kann dies erreicht werden, indem ein vordefiniertes Muster in der Referenzfunkeinheit 16 und der Testeinrichtung 26 hinterlegt wird. Denkbar ist jedoch auch, dass die Referenzfunkeinheit 16 und die Testeinrichtung 26 miteinander gekoppelt sind und sich das Muster 24, mit dem die Veränderung erfolgt, mitteilen. In einer Ausführung kann die Referenzfunkeinheit 16 bspw. das Muster an die Testeinrichtung 26 melden. Umgekehrt kann in einer anderen Ausführung auch die Testeinrichtung 26 eingerichtet sein, das definierte Muster 24 der Referenzfunkeinheit 16 vorzugeben und an diese zu übertragen. Diese und weitere Varianten des Funkortungssystems werden im Folgenden mit Bezug auf die Fig. 2 und 3 gezeigt, die jeweils Abwandlungen und Weiterbildungen des Funkortungssystems 10 gemäß Fig. 1 zeigen. Gleiche Bezugszeichen bezeichnen hierbei gleiche Teile wie in Fig. 1.

Bei dem Funkortungssystem 10 gemäß Fig. 2 sind die Referenzfunkeinheit 16 und die Testeinrichtung 26 unmittelbar miteinander gekoppelt. Über die Kopplung 28 kann die Referenzfunkeinheit 16 der Testeinrichtung 26 beispielsweise das Muster 24 mitteilen, mit dem es die zweite definierte Eigenschaft verändert. Alternativ kann über die Kopplung 28 die Referenzfunkeinheit 16 auch seine gegenwärtige Position der Testeinrichtung 26 mitteilen, sodass die Testeinrichtung 26 selbstständig auf das Muster 24 schließen kann. Ebenso ist es denkbar, dass über die Kopplung 28 die Testeinrichtung 26 der Referenzfunkeinheit 16 vorgibt nach welchem Muster 24 die zweite definierte Eigenschaft zu ändern ist.

In einer konkreten Ausführung kann die Referenzfunkeinheit 16 beispielsweise eingerichtet sein, zwischen einem ersten Zustand und einem zweiten Zustand zu wechseln, um die zweite definierte Eigenschaft zu variieren. In diesem Fall kann die Testeinrichtung 26 ein einfaches Taktsignal vorgeben, gemäß dem die Referenzfunkeinheit 16 zwischen den beiden Zuständen wechselt. Die unterschiedlichen Zustände können zum Beispiel dadurch eingenommen werden, dass die Referenzfunkeinheit 16 eingehende oder ausgehende Signale im ersten Zustand mit einer ersten Antenneneinheit 30a und im zweiten Zustand mit einer zweiten Antenneneinheit 30b verarbeitet, wobei die beiden Antenneneinheiten 30a und 30b in einem Abstand zueinander angeordnet sind. Denkbar ist auch, dass die Referenzfunkeinheit 16 den ersten Zustand durch die Verwendung eines ersten Signals und den zweiten Zustand durch die Verwendung eines zweiten Signals andeutet, das von dem ersten Signal verschieden ist.

Bei dem in der Fig. 2 dargestellten Funkortungssystem 10 ist zudem die erste Funkeinheit 12 direkt mit der Testeinrichtung 26 gekoppelt. Die erste Funkeinheit 12 ist hier eine Funkstation mit einer eigenen Signalverarbeitung, welche die Lokalisierungsaufgabe des Funkortungssystems 10 übernimmt. Beispielsweise kann die erste Funkeinheit 12 Funksignal an die zweite Funkeinheit 14 und die Referenzfunkeinheit 16 senden und anhand der rücklaufenden Signale die erste definierte Eigenschaft und die zweite definierte Eigenschaft zwischen den Einheiten bestimmen. Aus der ersten definierten Eigenschaft und der zweiten definierten Eigenschaft zusammen mit einer Referenzinformation, beispielsweise die eigene Position in dem Bezugssystem, kann die Funkeinheit 12 konkrete Positionsangaben der zweiten Funkeinheit 14 und der Referenzfunkeinheit 16 ermitteln.

Ferner kann die erste Funkeinheit 12 die Positionsangaben an die Testeinrichtung 26 übertragen. Die Testeinrichtung 26 kann in diesem Fall als eine einfache Vergleichseinheit ausgebildet sein, die aufgrund des hinterlegten oder des bereitgestellten Musters 24 eine Erwartungshaltung an die Positionsangaben hat und diese mit den übermittelten Positionsangaben vergleicht. Verändern sich die Positionsangaben für die Referenzfunkeinheit 16 entsprechend dem Muster 24, kann von einem ordnungsgemäßen Betrieb der Funkortung durch die erste Funkeinheit 12 ausgegangen werden, sodass auch die Positionsangabe bezüglich der zweiten Funkeinheit 14 als zutreffend anzunehmen ist.

Fig. 3 zeigt eine weitere Ausführungsform eines Funkortungssystems gemäß der vorliegenden Offenbarung. Das Funkortungssystem 10 ist in diesem Ausführungsbeispiel ein infrastrukturbasiertes Ortungssystem. Neben den zu ortenden Funkeinheiten 12, 14 16 weist das Funkortungssystem 10 mehrere ortsfeste Ankerstationen 32 sowie eine zentrale Verarbeitungseinheit 18 auf.

Das Funkortungssystems 10 ist hier eingerichtet, über die Ankerstationen 32 mittels Triangulation Positionen der Funkeinheiten 12, 14, 16 im Bezugssystem 34 zu bestimmen. Aus den Positionsangaben der einzelnen Funkeinheiten 12, 14, 16 kann das Funkortungssystem 10 auf definierte Eigenschaften (erste und zweite Eigenschaft) zwischen den Funkeinheiten 12, 14, 16 schließen. Beispielsweise kann das Funkortungssystem 10 einen Abstand zwischen den beiden Einheiten basierend auf dem Positionsangaben bestimmen. In dieser Ausgestaltung misst somit die Infrastruktur des Funkortungssystems, während die zu messenden Objekte einfache Transponder sind.

Wie zuvor beschrieben, ist auch hier die Referenzfunkeinheit 16 eingerichtet, die zweite definierte Eigenschaft kontinuierlich zu verändern. In der vorliegenden Ausführung ist die Funkeinheit 16 hierfür auf einem Referenzobjekt 36 angeordnet, welches sich in definierter Weise in dem Bezugssystem 34 bewegt. Als Bewegung ist hier eine Linearbewegung 38 entlang einer Achse des Bezugssystems 34 angedeutet. Die Linearbewegung 38 erfolgt in einer spezifischen Weise, die das Muster 24 repräsentiert. Das Muster 24, in dem die Bewegung erfolgt, ist ferner der Testeinrichtung 26 bekannt. Beispielsweise kann das Referenzobjekt 36 eine Lineareinheit sein, die zwischen zwei festen Positionen verfahrbar ist, sodass zu einem Zeitpunkt t1 die Referenzfunkeinheit 16 an einem ersten Ort ist und zu einem Zeitpunkt t2 an einem zweiten Ort. Je nachdem an welchem Ort die Referenzfunkeinheit 16 ist, ergibt sich eine unterschiedliche zweite definierte Eigenschaft 22, 22'.

Indem der Testeinrichtung 26 bekannt ist, zu welcher Zeit sich die Referenzfunkeinheit 16 an welchem Ort befindet (Muster 24), kann die Testeinrichtung 26 den ordnungsgemäßen Betrieb der Funkortung verifizieren.

In Bezug auf Fig. 2 und 3 wurden vorstehend zwei unterschiedliche Ausführungsformen des Funkortungssystems 10 beschrieben. Es versteht sich, dass die verschiedenen Varianten, mit denen die Referenzfunkeinheit 16 eingerichtet ist, die zweite definierte Eigenschaft 22, 22' zu verändern, beliebig miteinander kombiniert werden können. Beispielsweise kann die in der Ausführung gemäß Fig. 3 gezeigte Lineareinheit auch für eine Referenzfunkeinheit 16 gemäß der Ausführung nach Fig. 2 verwendet werden, und umgekehrt. Ebenso kann eine Referenzfunkeinheit 16 gemäß der zweiten Ausführungsform auch in einem infrastrukturbasierten Funkortungssystem gemäß der Fig. 3 verwendet werden, ohne die Offenbarung auf eine bestimmte Konstellation festzulegen.

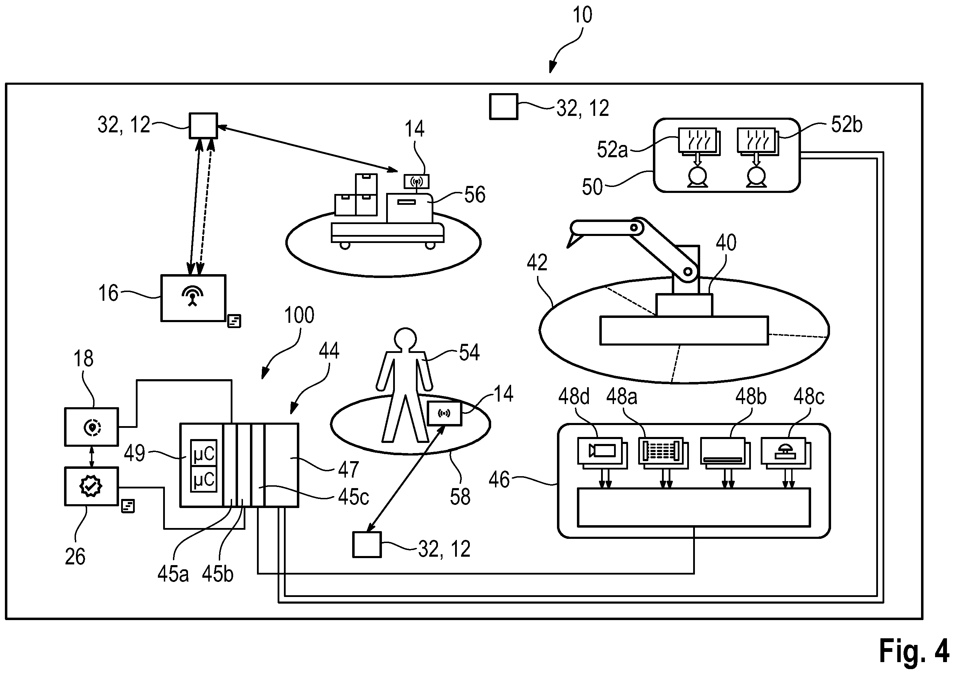

Fig. 4 zeigt ein Sicherheitssystem gemäß einem Ausführungsbeispiel der vorliegenden Offenbarung. In der Fig. 4 ist das Sicherheitssystem als Ganzes mit der Bezugsziffer 100 bezeichnet.

Das Sicherheitssystem 100 dient der Absicherung einer technischen Anlage, die hier als Industrieroboter 40 angedeutet ist. Der Arbeitsbereich des Industrieroboters 40 definiert einen Schutzbereich 42, innerhalb dessen jeder Zugang zu überwachen ist. Die Überwachung erfolgt über eine Sicherheitssteuerung 44, die hierfür üblicherweise eingangsseitig mit Sicherheitseinrichtungen 46, wie beispielsweise Lichtschranken 48a, Trittmatten 48b, Not-Aus-Tastern 48c, sichere Kameras 48d, etc. verbunden ist und ausgangsseitig mit Aktoren 50, beispielsweise Schütze in einer Stromversorgung 52a, 52b der technischen Anlage, die in Abhängigkeit der von den Sicherheitseinrichtungen 46 bereitgestellten Eingangssignalen eine sicherheitsgerichtete Steuerfunktion ausführen. Betritt beispielsweise eine Person 54 oder eine autonom agierendes Fahrzeug 56 die Schutzzone 42 kann dies von den mit der Sicherheitssteuerung 44 verbundenen Sicherheitseinrichtungen 46 erfasst werden und der Industrieroboter 40 durch Abschalten der Stromversorgung 52a, 52b in einen sicheren Zustand überführt werden.

Die Sicherheitssteuerung 44 ist im vorliegenden Beispiel eine modulare Sicherheitsteuerung mit Eingangsmodulen 45a, 45b, 45c, einem Ausgangsmodul 47 sowie mit einem Kopfmodul 49 in einer Modulreihe. "Modular" bedeutet hier, dass sich die Anzahl der Eingangsmodule und Ausgangsmodule je nach Anforderung variieren lässt, indem zusätzliche Ein- und Ausgangsmodule der Modulreihe hinzugefügt werden.

Wie eine "normale" Steuerung der Standardautomatisierung (auch als speicherprogrammierbare Steuerung (SPS) bezeichnet) führt eine Sicherheitssteuerung Steuerfunktionen aus. Eine Sicherheitssteuerung verfügt hierfür jedoch im Gegensatz zu einer normalen Steuerung über zusätzliche sicherheitsgerichtete Einrichtungen, die eine fehlersichere Ausführung gewährleisten können. So unterscheidet sich die Sicherheitssteuerung regelmäßig von einer normalen Steuerung durch zwei getrennte Kanäle für die Verarbeitung, einen diversitären Aufbau mit unterschiedlicher Hardware, ständige Tests der Ein- und Ausgänge, ständige Vergleiche der Anwenderdaten, Spannungs- und Zeitüberwachung sowie durch eine sichere Abschaltung im Fehler- und Gefahrenfall.

Die Sicherheitssteuerung 44 ist im vorliegenden Beispiel zudem eine adaptive Sicherheitssteuerung. "Adaptiv" bedeutet in diesem Zusammenhang, dass sich die von der Sicherheitssteuerung 44 ausgeführte Sicherheitsfunktion, im Folgenden auch als Sicherheitskonfiguration bezeichnet, in Abhängigkeit eines Eingangsparameters dynamisch verändern kann. Der Eingangsparameter kann beispielsweise die Positionsangabe eines sich im Arbeitsbereich befindlichen Objekts sein, wobei die Positionsangabe von einem zuvor beschriebenen Funkortungssystem 10 der Sicherheitssteuerung 44 bereitgestellt wird.

In einem Anwendungsbeispiel kann beispielsweise die Positionsangabe eines fahrerlosen Transportfahrzeugs 56 dazu verwendet werden, die sicherheitsgerichtete Steuerfunktion, also in diesem Fall das sichere Abschalten des Industrieroboter 40, zu unterbinden, wenn das Fahrzeug 56 in die Schutzzone 42 des Industrieroboter 40 einfährt. In einem anderen Anwendungsbeispiel kann die Positionsangabe einer Person 54 dafür verwendet werden, die Schutzzone 42 dynamisch in ihrer Größe anzupassen. Hierzu kann beispielsweise um die Person 54 herum ein Schutzraum 58 basierend auf der Positionsangabe definiert werden, nachdem sich die Schutzzone 42 zu richten hat. Es versteht sich, dass diese Anwendungsbeispiele nur exemplarisch zu verstehen sind und andere Konstellationen denkbar sind, bei denen eine dynamische Sicherheitskonfiguration zu Einsatz kommen kann.

Die Positionsangaben können mittels eines der zuvor beschriebenen Funkortungssysteme 10 ermittelt und beispielsweise von einer zentralen Verarbeitungseinheit 18 des Funkortungssystems 10 an die Sicherheitssteuerung 44 übertragen werden. Die Funkeinheiten 12-14 sind im Arbeitsraum verteilt, wobei an den bewegten Objekten, dessen Position bestimmt werden soll, jeweils eine Funkeinheit angeordnet ist. Im hier dargestellten Beispiel entsprechen die Funkeinheiten an den Objekten zweiten Funkeinheiten 14 im Sinne dieser Offenbarung und die ersten Funkeinheiten 12 im Sinne dieser Offenbarung fallen in diesem Beispiel mit den Ankerstationen 32 des Funkortungssystem 10 zusammen.

Ferner weist das Funkortungssystem 10 mindestens eine Referenzfunkeinheit 16 sowie eine entsprechende Testeinrichtung 26 auf. Die Testeinrichtung 26 überprüft in der zuvor beschriebenen Weise den ordnungsgemäßen Betrieb des Funkortungssystems 10 und bestätigt die von dem Funkortungssystem 10 erfassten Positionsangaben. Die Testeinrichtung 26 kann hierfür wie ein weiterer Sicherheitssensor an ein Eingangsmodul 45b der Sicherheitssteuerung 44 angeschlossen sein und ein Freigabesignal bereitstellen, solange der ordnungsgemäße Betrieb des Funkortungssystems 10 anhand der Überprüfung mittels der dynamischen Referenzfunkeinheit 16 festgestellt wird.

Die Sicherheitssteuerung 44 ist dazu eingerichtet sein, die Sicherheitskonfiguration basierend auf den Positionsangaben nur dann auszuführen bzw. anzupassen, wenn das Freigabesignal an dem Eingangsmodul 45b der Sicherheitssteuerung 44 anliegt. Im vorliegenden Fall kann die Sicherheitssteuerung 44 so eingerichtet sein, den Betrieb des Industrieroboters 40 nur dann zu erlauben, wenn das Freigabesignal der Testeinrichtung 26 an dem Eingangsmodul 45b der Sicherheitssteuerung 44 anliegt. Hierfür steuert die Sicherheitssteuerung 44 das Ausgangsmodul 47 so an, dass dieses Schütze 50 in der Stromversorgung 52a, 52b des Industrieroboters 40 nur dann bestromt (anzieht), wenn das Freigabesignal an dem Eingangsmodul 45b anliegt.

Die Sicherheitsteuerung 44 kann somit eine Steuerung basierend auf Positionsangaben des Funkortungssystems 10 ausführen, ohne über eine zusätzliche von dem Funkortungssystem unabhängige Einrichtung die Positionseingabe selbst prüfen zu müssen. Vielmehr reicht es aus, wenn die Sicherheitssteuerung 44 über ein weiteres Eingangsmodul das Freigabesignal der Testeinrichtung 26 entgegennimmt und das Ausgangsmodul 47 entsprechend des Freigabesignals ansteuert. Die Testeinrichtung 26 entspricht somit einer weiteren Sicherheitseinrichtung 46 und die Sicherheitssteuerung 44 muss selbst keinen Abgleich zweier Positionsangaben unterschiedlicher Sensoren durchführen, sondern lediglich ein weiteres Eingangssignal verarbeiten.

Es versteht sich, dass mit den vorstehend beschriebenen Einrichtungen auch anspruchsvollere Testverfahren möglich sind. Beispielsweise kann das Funkortungssystem eingerichtet sein, einen mit einem ersten Funkortungsverfahren ermittelten Abstand zwischen zwei Funkeinheiten an eine der Funkeinheiten zu übermitteln, die über ein zweites, zum ersten verschiedenes Funkordnungsverfahren ebenfalls den Abstand zwischen den beiden Funkeinheiten misst und mit dem zuvor gemessenen Abstand vergleicht. Durch die Verwendung eines weiteren Funkortungsverfahrens kann die Diversität weiter erhöht werden. Zusätzlich kann diese Maßnahme mit der zuvor beschriebenen dynamischen Messung, bei der eine der Funkeinheiten zusätzlich dynamisch seine Position verändert, kombiniert werden. Die Zuverlässigkeit des Gesamtsystems kann so weiter erhöht werden.

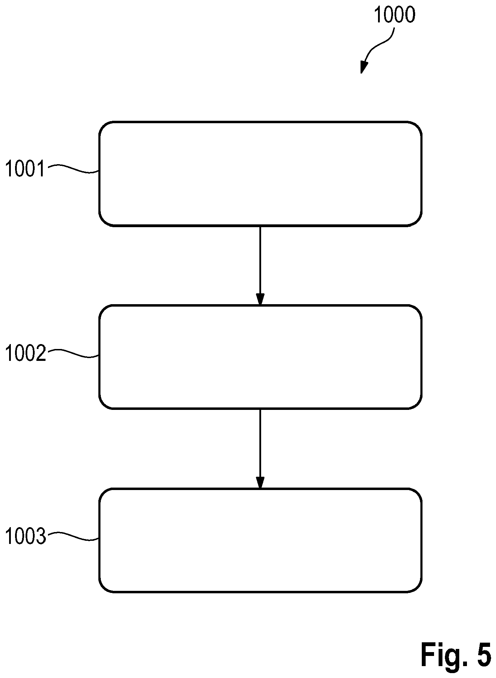

Fig. 5 zeigt abschließend in einem schematischen Flussdiagramm ein Ausführungsbeispiel eines Verfahrens für ein Funkortungssystem mit Testeinrichtung. Das Verfahren ist in seiner Gesamtheit der Bezugsziffer 1000 bezeichnet.

In einem ersten Schritt 1001 bestimmt das Funkortungssystem mittels einer Funkortung eine erste definierte Eigenschaft zwischen einer ersten Funkeinheit und einer zweiten Funkeinheit innerhalb des Funkortungssystems. Die Funkortung ist hierbei nicht auf ein bestimmtes Messverfahren beschränkt. Die erste definierte Eigenschaft kann insbesondere die Position oder Lage der ersten und zweiten Funkeinheit in einem Bezugssystem des Funkortungssystems oder eine relative Angabe zwischen den beiden Funkeinheiten, beispielsweise ein Abstand zwischen diesen, sein.

In einem zweiten Schritt S1002 bestimmt das Funkortungssystem mittels vorzugsweise der gleichen Funkortungsmethode eine zweite definierte Eigenschaft zwischen der ersten Funkeinheit und einer Referenzfunkeinheit. Insbesondere führt das Funkortungssystem eine kontinuierliche Messung oder aber mindestens zwei Messungen zu unterschiedlichen Zeitpunkten durch, um eine zeitliche Veränderung der zweiten definierten Eigenschaft zu ermitteln. Die Änderung der zweiten definierten Eigenschaft erfolgt systematisch in einem bekannten Muster.

In einem letzten Schritt S1003 bestätigt eine mit dem Funkortungssystem koppelbare Testeinrichtung, ob das Funkortungssystem die sich gemäß dem Muster verändernde zweite definierte Eigenschaft erfasst hat. Hierfür kann die Testeinrichtung überprüfen, ob die von dem Funkortungssystem für die zweite definierte Eigenschaft ermittelten Werte dem bekannten Muster entsprechen. Wenn dies der Fall ist, kann die Testeinrichtung ein Freigabesignal als Bestätigung aussenden, welches beispielsweise von einer Sicherheitssteuerung weiterverarbeitet wird.

Die vorstehend genannten Ausführungsbeispiele für das Funkortungssystem, das Sicherheitssystem und das Verfahren sind grundsätzlich nur als Beispiele zu verstehen, ohne den Gegenstand dieser Offenbarung einzuschränken. Vielmehr wird der Gegenstand ausschließlich durch die nachfolgenden Ansprüche definiert und beschränkt.

## Patentansprüche

1. Funkortungssystem (10), aufweisend:
eine erste Funkeinheit (12);
ein zweite Funkeinheit (14);
eine Referenzfunkeinheit (16); sowie
eine mit dem Funkortungssystem (10) koppelbare Testeinrichtung (26),
wobei das Funkortungssystem (10) dazu eingerichtet ist, mittels einer Funkortung eine erste definierte Eigenschaft (20), insbesondere Position oder Lage, zwischen der ersten Funkeinheit (12) und der zweiten Funkeinheit (14) zu bestimmen sowie mittels der Funkortung eine zweite definierte Eigenschaft (22, 22`) zwischen der ersten Funkeinheit (12) und der Referenzfunkeinheit (16) zu bestimmen,
wobei die zweite definierte Eigenschaft (22, 22`) gemäß einem der Testeinrichtung (26) bekannten Muster (24) kontinuierlich veränderbar ist, und
wobei die Testeinrichtung (26) dazu eingerichtet ist, eine Bestätigung der ersten definierten Eigenschaft (20) nur dann zu erzeugen, wenn das Funkortungssystem (10) die sich gemäß dem Muster (24) verändernde zweite definierte Eigenschaft (22, 22`) erfasst.

2. Funkortungssystem nach Anspruch 1, wobei die Referenzfunkeinheit (16) an einem Referenzobjekt (36) angeordnet ist, welches durch eine Positionsänderung (38) die zweite definierte Eigenschaft gemäß dem Muster (24) verändert.

3. Funkortungssystem nach Anspruch 1 oder 2, ferner aufweisend: einen Sensor, der mit der Testeinrichtung (26) koppelbar ist, wobei der Senor die Positionsänderung des Referenzobjekts (36) erfasst, um der Testeinrichtung (26) das Muster (24) bekannt zu machen.

4. Funkortungssystem nach Anspruch 3, wobei das Referenzobjekt (36) seine Position zufällig verändert.

5. Funkortungssystem nach einem der Ansprüche 1 bis 4, wobei die die Referenzfunkeinheit (16) eingerichtet ist, ein Signal, welches die zweite definierte Eigenschaft repräsentiert, auszusenden und zu variieren, um die zweite definierte Eigenschaft gemäß dem Muster (24) zu verändern.

6. Funkortungssystem nach Anspruch 5, wobei die Referenzfunkeinheit (16) eine erste Antenneneinheit (30a) und eine zweite Antenneneinheit (30b) aufweist, die vorzugsweise räumlich voneinander beabstandet sind, und wobei die Referenzfunkeinheit (16) das Signal wahlweise mit der ersten Antenneneinheit (30a) oder der zweiten Antenneneinheit (30b) versendet, um das Signal gemäß dem Muster (24) zu verändern.

7. Funkortungssystem nach einem der Ansprüche 1 bis 6, wobei die Referenzfunkeinheit (16) eingerichtet ist, die zweite definierte Eigenschaft nur in einem definierten Testintervall zu verändern.

8. Funkortungssystem nach einem der Ansprüche 1 bis 7, wobei die erste definierte Eigenschaft und die zweite definierte Eigenschaft eine Signallaufzeit, eine Signallaufzeitdifferenz, eine Signalumlaufzeit, ein Signaleinfallswinkel, eine Signalstärke, eine Kombination hiervon oder hiervon abgeleitete Werte sind.

9. Funkortungssystem nach einem der Ansprüche 1 bis 8, wobei die erste Funkeinheit (12) eine Ankerstation (32) des Funkortungssystems (10) ist mit einer innerhalb eines dem Funkortungssystem (10) zugrundeliegenden Bezugssystems (34) festen Position.

10. Funkortungssystem nach einem der Ansprüche 1 bis 9, wobei die zweite Funkeinheit (14) ein mobiler Transponder ist, der eingehende Signale aufnimmt und vorzugsweise automatisch beantwortet.

11. Verfahren (1000) für ein Funkortungssystem (10) mit einer ersten Funkeinheit (12), einer zweiten Funkeinheit (14), einer Referenzfunkeinheit (16) sowie mit einer Testeinrichtung (26), die mit dem Funkortungssystem (10) koppelbar ist, aufweisend:
- Bestimmen einer ersten definierten Eigenschaft (20), insbesondere Position oder Lage, zwischen der ersten Funkeinheit (12) und der zweiten Funkeinheit (14) mittels einer Funkortung;
- Bestimmen einer zweiten definierten Eigenschaft (22, 22`) zwischen der ersten Funkeinheit (12) und der Referenzfunkeinheit (16) mittels der Funkortung, wobei die zweite definierte Eigenschaft (22, 22`) gemäß einem der Testeinrichtung bekannten Muster (24) kontinuierlich veränderbar ist, und
- Bestätigen der ersten definierten Eigenschaft (20) durch die Testeinrichtung (26) in dem Fall, dass das Funkortungssystem (10) die sich gemäß dem Muster (24) verändernde zweite definierte Eigenschaft erfasst.

12. Sicherheitssystem (100) zur Absicherung einer technischen Anlage mit einem Funkortungssystem (10) nach einem der Ansprüche 1 bis 10, aufweisend:
eine Sicherheitssteuerung (44), die dazu eingerichtet ist, eine Sicherheitskonfiguration basierend auf einer Funkortung des Funkortungssystems (10) auszuführen oder anzupassen,
wobei die Sicherheitssteuerung (44) die Sicherheitskonfiguration nur dann ausführt oder anpasst, wenn die Testeinrichtung (26) des Funkortungssystems die Funkortung bestätigt.

13. Sicherheitssystem nach Anspruch 12, wobei die Testeinrichtung (26) dazu eingerichtet ist, ein Freigabesignal auszugeben und an die Sicherheitssteuerung (44) zu übertragen, um die Funkortung des Funkortungssystems (10) zu bestätigen.

14. Sicherheitssystem nach Anspruch 13, wobei die Sicherheitssteuerung (44), dazu eingerichtet ist, die technische Anlage in einen sicheren Zustand zu überführen, insbesondere abzuschalten, wenn die Sicherheitssteuerung (44) das Freigabesignal nicht empfängt.

15. Sicherheitssystem nach Anspruch 13 oder 14, wobei die Sicherheitssteuerung (44) mehrkanalig redundant ausgestaltet ist, um das Freigabesignal fehlersicher auszuwerten.
